# DEMANDE DE BREVET EUROPEEN

(11) **EP 1 965 299 A1**
(43) Date de publication de la demande: **03.09.2008**
(21) Numéro de dépôt: 08150101.7
(22) Date de dépôt: 08.01.2008
(51) Int. Cl.: G06F 3/14

(54) **Procédé de diffusion d'un contenu numérique, appareil et serveur pour la mise en oeuvre d'un tel procédé**

(30) Priorité: 08.01.2007 FR 0752571
(71) Demandeur: Wavestorm, F-75014 Paris (FR)
(72) Inventeur: Casassovici, Alexander, 92200, NEUILLY-SUR-SEINE (FR)
(74) Mandataire: Tanty, François

(57) **Abrégé**

La présente invention concerne un procédé de diffusion d'au moins un contenu numérique au moyen d'au moins un appareil de diffusion de ce contenu, notamment un cadre numérique, le procédé comportant les étapes suivantes :
- permettre de créer, notamment par le biais d'un terminal autre que l'appareil de diffusion, sur un serveur d'un réseau informatique permettant l'accès à au moins un site fournisseur de contenu, au moins un compte utilisateur,
- permettre de définir sur le compte utilisateur au moins un profil utilisateur,
- transmettre depuis le serveur, en fonction du profil utilisateur, à l'appareil de diffusion connecté au réseau, au moins une adresse d'un contenu numérique présent sur un site fournisseur de contenu afin de permettre à l'appareil de diffusion de récupérer et de diffuser ce contenu numérique grâce à des moyens de diffusion, notamment sonores et/ou visuels.

## Description

La présente invention concerne un procédé de diffusion d'un contenu numérique au moyen d'un appareil de diffusion de ce contenu, notamment un cadre numérique.

Actuellement, on rencontre sur le marché des cadres numériques (appelés en anglais *digital picture frames)* comportant un lecteur de carte mémoire intégré. Ces cadres numériques présentent l'inconvénient de nécessiter un changement de la carte mémoire pour modifier le contenu affichable.

On connaît par les brevets US 6 961 046 et US 6 717 567 des cadres numériques agencés pour recevoir des images envoyées par une source annexe telle qu'un appareil photonumérique ou un ordinateur personnel au moyen d'une connexion non filaire. Une intervention sur la source extérieure est nécessaire à chaque fois que l'on souhaite modifier le contenu affichable.

On connaît par la demande de brevet US 2002/0126150 un cadre numérique capable d'échanger des données avec un appareil photonumérique par le biais d'un réseau local sans fil. Cette demande divulgue également, sans donner de détails, un cadre numérique comportant un modem intégré à relier à une prise téléphonique pour permettre au cadre numérique de composer un numéro d'accès à Internet et de recevoir des images à afficher.

La société eStarling propose un cadre numérique capable de se connecter par une liaison Wi-Fi à Internet et d'afficher des images reçues sur un serveur de messagerie à une adresse email.

Le cadre comporte sur le côté des touches *avance, recul, diaporama, rotation, suppression* et *mise à jour sur la toile.*

La mise en service du cadre nécessite la connexion de celui-ci à un ordinateur personnel, par un câble USB, ce qui oblige l'utilisateur à disposer d'un tel ordinateur sur le même lieu que le cadre.

Le cadre peut diffuser le contenu qui arrive à l'adresse de messagerie mais ne permet que difficilement de changer le contenu.

Or, une telle fonctionnalité peut être souhaitable lorsque le cadre est placé dans une pièce où plusieurs personnes sont susceptibles de demeurer, chacune ayant une préférence pour une source de contenu et/ou un type de contenu qui n'est pas nécessairement la même que celle des autres.

Il existe un besoin pour améliorer encore les appareils de diffusion d'un contenu numérique tels que les cadres numériques, par exemple.

L'invention vise à répondre à ce besoin en cherchant à faire bénéficier l'utilisateur d'un appareil de diffusion de contenu qui soit à la fois de fonctionnement fiable et facile à utiliser, notamment dans le cas où l'utilisateur souhaite modifier le contenu affiché, et qui permette d'augmenter considérablement des types de contenu supportés.

Selon un premier de ses aspects parmi d'autres, l'invention a pour objet un procédé de diffusion d'au moins un contenu numérique au moyen d'au moins un appareil de diffusion de ce contenu, notamment un cadre numérique, le procédé comportant les étapes suivantes :
- permettre de créer, notamment par le biais d'un terminal autre que l'appareil de diffusion, sur un serveur d'un réseau informatique permettant l'accès à au moins un site fournisseur de contenu, au moins un compte utilisateur,
- permettre de définir sur le compte utilisateur au moins un profil utilisateur,
- transmettre depuis le serveur, en fonction du profil utilisateur, à l'appareil de diffusion connecté au réseau, au moins une adresse d'un contenu numérique présent sur un site fournisseur de contenu afin de permettre à l'appareil de diffusion de récupérer et de diffuser ce contenu numérique grâce à des moyens de diffusion, notamment sonores et/ou visuels.

L'invention facilite la personnalisation et le renouvellement du contenu numérique diffusé puisque ceux-ci peuvent s'effectuer avec l'aide du serveur qui gère le compte utilisateur.

De plus, le contenu peut être reçu selon l'invention de sites fournisseur de contenu distincts du serveur, ce qui permet de diversifier les sources de contenu.

Par ailleurs, de par l'emploi selon un aspect de l'invention, d'un terminal autre que l'appareil de diffusion pour accéder au compte utilisateur et créer, modifier, copier ou consulter au moins un profil utilisateur, l'appareil de diffusion peut être facilement mis en service et être dépourvu d'une interface utilisateur complexe, de sorte que sa réalisation s'en trouve simplifiée.

En outre, le contenu affiché peut être facilement modifiable. Le serveur peut être agencé par exemple de manière à permettre à l'utilisateur ayant un compte utilisateur de créer un nouveau profil copié sur un profil d'un tiers, ce qui peut procurer un gain de temps et permettre à l'utilisateur de bénéficier d'un profil permettant d'obtenir de façon efficace un contenu sur un sujet donné.

La mise en service de l'appareil de diffusion peut s'effectuer, le cas échéant, sans connexion physique entre l'appareil de diffusion et le terminal.

La recherche d'un site fournisseur de contenu à diffuser peut ne pas être effectuée par l'appareil de diffusion mais par le serveur, en fonction du ou des profils utilisateur.

Le serveur peut être agencé pour effectuer, en fonction d'un profil utilisateur, au moins une requête auprès d'un site fournisseur afin d'obtenir au moins une adresse permettant à l'appareil de diffusion d'accéder à au moins un contenu correspondant à ce profil utilisateur. Cette requête peut être effectuée à partir d'informations associées à ce profil utilisateur, par exemple des mots clés. Le serveur peut ainsi jouer en quelque sorte le rôle d'un moteur de recherche afin de fournir à l'utilisateur un contenu en rapport avec le profil utilisateur considéré.

Le procédé comporte, dans un exemple de mise en oeuvre de l'invention, une étape de transmission à l'appareil de diffusion connecté au réseau d'au moins une notification de mise à disposition d'au moins un nouveau contenu numérique à diffuser.

De manière à recevoir une telle notification, l'appareil de diffusion peut interroger périodiquement le serveur sur l'existence d'un nouveau contenu numérique à diffuser. Cette interrogation peut être nécessaire pour permettre à l'appareil de diffusion de recevoir la notification en présence d'un pare-feu.

La réception d'une telle notification peut être signalée sur l'appareil de diffusion par un message sonore et/ou visuel, par exemple le changement d'état d'un voyant et/ou l'affichage d'un pictogramme.

Le signalement de la réception de la notification peut permettre à l'utilisateur d'agir sur l'appareil de diffusion pour provoquer la réception du nouveau contenu numérique ou sa suppression.

Le cas échéant, la notification comporte au moins une information relative au type et/ou à la provenance du nouveau contenu, et cette information peut par exemple être affichée par l'appareil de diffusion.

Par « type de contenu », on entend désigner un contenu de type image, de type vidéo ou de type son, ou autre. Une information concernant le type de contenu, par exemple transmise par le serveur à l'appareil de diffusion, peut comporter une identification du site de provenance du contenu.

Le procédé peut comporter la fourniture, avec l'appareil de diffusion, d'une adresse du serveur sur le réseau et d'un identifiant de l'appareil de diffusion. Cet identifiant peut par exemple être l'adresse MAC, laquelle est un identifiant physique stocké dans une carte réseau ou une interface réseau permettant d'attribuer mondialement une adresse unique.

Le serveur peut être agencé pour transmettre à l'appareil de diffusion au moins un lien renvoyant, sur le site fournisseur de contenu, à un contenu numérique. L'appareil de diffusion peut être agencé pour télécharger ce contenu automatiquement, par exemple en mode *push.*

Un compte utilisateur peut comporter plusieurs profils utilisateurs et l'utilisateur peut avoir la possibilité d'en sélectionner un par défaut, qui est par exemple celui qui est sélectionné lors de la mise en service de l'appareil de diffusion.

Le serveur peut envoyer à l'appareil de diffusion la liste des profils utilisateurs existant sur le compte et l'utilisateur peut exercer une action sur l'appareil de diffusion afin de sélectionner un profil utilisateur parmi les profils de la liste, de façon à diffuser un contenu correspondant au profil sélectionné. Cela peut permettre un changement simple et rapide du contenu diffusé, suite à un changement de personne dans l'environnement de l'appareil de diffusion, par exemple.

La liste des profils utilisateurs disponibles est par exemple affichée par l'appareil de diffusion au moins lors de la sélection du profil.

Le contenu numérique peut comporter au moins un fichier image ou vidéo, par exemple choisi parmi les fichiers de format *.arr, * .mpg, *.mov, *.esf, *.wmv, *.dvx, *.qt, *.avi, *.jpg, *.bmp, *.png, *.tif, *.ps, *.eps.

Le contenu numérique peut comporter au moins un fichier audio, par exemple choisi parmi les fichiers de format *.wav, *.mp3, *.ra, *.ram, *.aiff, *.en, *.mid, * .ogg, *.asf, * .aac.

Le serveur peut envoyer à l'appareil de diffusion un logiciel de lecture, encore appelé lecteur ou *player,* du contenu numérique en fonction du type de contenu numérique à diffuser. Il peut s'agir par exemple d'un logiciel de lecture d'images, de vidéos, de fichiers sons, qui permet la lecture du contenu numérique sur l'appareil de diffusion, compte tenu des spécificités techniques de celui-ci.

La création du compte utilisateur peut comporter la fourniture au serveur d'un identifiant de l'utilisateur et de l'appareil de diffusion. Un compte utilisateur peut concerner plusieurs appareils de diffusion.

Le serveur peut être agencé pour permettre à l'utilisateur d'ajouter à son compte un appareil de diffusion et de définir pour cet appareil de diffusion le ou les profils utilisateurs qui peuvent s'appliquer.

La consultation d'un profil utilisateur peut être d'accès libre ou non.

Le serveur peut également être agencé pour permettre à l'utilisateur de partager un profil utilisateur entre plusieurs appareils de diffusion.

Le serveur peut par exemple être agencé pour permettre à un utilisateur de rendre public un profil utilisateur afin que d'autres utilisateurs se connectant au serveur puissent dupliquer ce profil et l'associer à un appareil de diffusion donné.

Le serveur peut également être agencé de manière à ne permettre la diffusion d'un profil utilisateur que parmi des tiers préalablement identifiés par l'utilisateur et par exemple clients eux aussi du serveur. Le serveur peut être agencé pour répertorier les adresses de ces tiers.

La création du compte utilisateur peut comporter l'entrée d'un identifiant ou mot de passe permettant d'accéder de façon sélective au compte utilisateur.

La création d'un profil utilisateur peut comporter la sélection d'une ou plusieurs plages temporelles associées à la réception sur l'appareil de diffusion d'un ou plusieurs contenus. A chaque profil peut par exemple être associée une plage horaire de réception par l'appareil de diffusion d'un contenu correspondant.

Le procédé selon l'invention peut comporter l'étape consistant à permettre à l'utilisateur, au cours de la diffusion d'un contenu, d'agir sur une interface utilisateur de l'appareil de diffusion et peut également comporter l'étape consistant à modifier le contenu reçu en fonction de cette action. L'utilisateur peut par exemple, en agissant sur l'appareil de diffusion, provoquer l'envoi par ce dernier au serveur d'au moins une instruction conduisant le serveur à modifier le profil utilisateur en cours afin d'adresser à l'appareil de diffusion un nouveau contenu correspondant à un nouveau profil utilisateur sélectionné par l'utilisateur sur l'appareil de diffusion.

Le serveur peut adresser à l'appareil de diffusion une liste d'adresses auxquelles l'appareil de diffusion se connecte successivement pour télécharger les contenus correspondants.

Dans le cas par exemple où l'appareil de diffusion est agencé pour afficher un diaporama, le serveur peut adresser à l'appareil de diffusion la liste des adresses correspondant aux différentes images du diaporama.

L'appareil de diffusion peut être agencé pour permettre à l'utilisateur de faire défiler les images en réponse à une action sur une touche, par exemple.

Le procédé selon l'invention peut comporter l'étape consistant à échanger, grâce à une interface matérielle de l'appareil de diffusion, des données avec au moins un périphérique choisi parmi une imprimante, un micro-ordinateur, un scanner, un appareil photonumérique, un assistant personnel numérique, un téléphone, un caméraphone, une alarme domestique, un portier vidéo, un port vidéo et/ou audio d'un appareil multimédia, une caméra, une interface d'un réseau domotique, une station météo, une clé USB ou tout autre appareil électronique de création, stockage ou diffusion d'informations numériques, disposant d'un moyen de communication filaire ou non. Cela peut permettre par exemple de profiter d'un écran de l'appareil de diffusion pour afficher des informations supplémentaires en provenance du périphérique, momentanément ou en permanence, par exemple en l'absence d'affichage d'un contenu numérique ou en alternance avec celui-ci.

L'appareil de diffusion peut être dépourvu de clavier alphanumérique complet, de disque dur, de lecteur de disquette et de lecteur de disque optique, ce qui peut permettre d'en simplifier la réalisation.

L'appareil de diffusion peut comporter les moyens de diffusion sonores et/ou visuels.

L'appareil de diffusion peut comporter un écran, notamment un écran intégré, formant un ensemble monobloc avec le reste de l'appareil de diffusion.

En variante, l'appareil de diffusion peut ne pas comporter en lui-même de moyens de diffusion sonores et/ou visuels et être prévu pour être relié à des moyens de diffusion sonores et/ou visuels externes.

Par exemple, l'appareil de diffusion peut être prévu pour être relié à un moniteur ou à une chaîne stéréo par une liaison filaire ou non, voire être relié à une entrée vidéo d'un téléviseur ou d'un projecteur vidéo.

Le cas échéant, l'appareil de diffusion peut comporter une entrée vidéo et/ou audio qui permette de l'utiliser comme moniteur ou comme haut-parleur, par exemple en l'absence de réception de données du réseau.

L'appareil de diffusion peut comporter des moyens de communication non filaires, par exemple une interface de type Wi-Fi pour échanger des données avec le réseau informatique, lequel peut être Internet. Ces moyens de communication peuvent être amovibles ou non et peuvent former ou non un ensemble monobloc avec le reste de l'appareil de diffusion lors de l'utilisation.

Le cas échéant, le terminal peut accéder au contenu présent sur le site fournisseur et téléchargé par l'appareil de diffusion.

L'invention a encore pour objet selon un autre de ses aspects, indépendamment ou en combinaison avec ce qui précède, un procédé de diffusion d'un contenu numérique au moyen d'un appareil de diffusion de ce contenu, notamment un cadre numérique, le procédé comportant les étapes suivantes :
- permettre de définir sur un serveur d'un réseau informatique permettant l'accès à au moins un site fournisseur de contenu, au moins un profil utilisateur associé à un compte utilisateur,
- transmettre depuis le serveur en fonction du profil utilisateur, à l'appareil de diffusion connecté au réseau, au moins une adresse d'un contenu numérique présent sur un site fournisseur de contenu afin de permettre à l'appareil de diffusion de récupérer et de diffuser le contenu numérique grâce à des moyens de diffusion sonores et/ou visuels,
- permettre la transmission depuis le serveur à l'appareil de diffusion d'une liste de profils utilisateurs associés à un compte utilisateur,
- permettre à l'utilisateur de sélectionner un profil utilisateur en agissant sur une interface utilisateur de l'appareil de diffusion,
- transmettre à l'appareil de diffusion, en fonction de ce nouveau profil utilisateur ainsi sélectionné, au moins une adresse d'un contenu numérique correspondant.

Dans un tel procédé, le cas échéant, le serveur peut adresser à l'appareil de diffusion au moins une information indiquant le type de lecteur ou logiciel de lecture nécessaire pour lire le contenu numérique à l'adresse envoyée, par exemple un lecteur vidéo, image ou son, et l'appareil de diffusion peut être agencé pour télécharger le lecteur avant de télécharger le contenu numérique.

Le procédé selon l'invention peut comporter l'affichage sur l'écran d'au moins une fonctionnalité associée à une touche de l'appareil de diffusion, la fonctionnalité affichée étant par exemple fonction du contenu diffusé, notamment du type de contenu, par exemple vidéo, image ou son et/ou du site de provenance.

Le procédé peut comporter la détection de la proximité de l'utilisateur pour provoquer l'affichage de la fonctionnalité sur l'écran, ce qui permet de ne pas diminuer en permanence la surface d'affichage utile pour diffuser le contenu.

L'invention a encore pour objet, selon un autre de ses aspects, indépendamment ou en combinaison avec ce qui précède, un procédé de diffusion d'un contenu numérique au moyen d'un appareil de diffusion de ce contenu, notamment un cadre numérique, le procédé comportant les étapes suivantes :
- interroger périodiquement avec l'appareil de diffusion un serveur agencé pour signaler la disponibilité d'un nouveau contenu numérique,
- interroger avec le serveur au moins un site fournisseur afin de détecter la présence sur ce site fournisseur d'un nouveau contenu numérique et dans l'affirmative, signaler la présence de ce nouveau contenu numérique à l'appareil de diffusion,
- transmettre avec le serveur à l'appareil de diffusion une notification concernant la présence d'un nouveau contenu numérique, cette notification comportant au moins l'adresse permettant de récupérer sur le site fournisseur le nouveau contenu, ainsi éventuellement que l'adresse d'un logiciel de lecture correspondant à ce nouveau contenu,
- permettre à l'appareil de diffusion, en réponse à une action de l'utilisateur sur une interface utilisateur, de récupérer le contenu numérique à l'adresse ainsi communiquée par le serveur.

Tous les sites associés à au moins un profil utilisateur qui est défini pour télécharger automatiquement un nouveau contenu (mode *push)* peuvent être ainsi interrogés par le serveur.

L'invention a encore pour objet, selon un autre de ses aspects, un système informatique comportant :
- un appareil de diffusion d'un contenu numérique, dépourvu de clavier alphanumérique complet et pouvant comporter des moyens de diffusion sonores et/ou visuels, et pouvant accéder à un réseau,
- un serveur accessible par le réseau, le serveur étant agencé pour :
   - permettre la connexion au serveur d'un terminal, qui le cas échéant est distinct de l'appareil de diffusion,
   - permettre la création d'un compte utilisateur définissant au moins un profil utilisateur associé à l'appareil de diffusion,
   - rechercher en fonction du profil utilisateur au moins une adresse sur un site fournisseur de contenu accessible par le réseau,
   - amener l'appareil de diffusion à télécharger depuis l'adresse ainsi recherchée un contenu du site fournisseur de contenu, notamment en adressant à l'appareil de diffusion cette adresse.

Le système informatique peut comporter une ou plusieurs des caractéristiques précédemment indiquées à l'égard du procédé de diffusion.

L'invention a encore pour objet, selon un autre de ses aspects, un appareil de diffusion d'un contenu numérique, notamment dépourvu de clavier alphanumérique complet, et pouvant comporter des moyens de diffusion sonores et/ou visuels, comportant une unité de traitement numérique agencée pour permettre à l'appareil de :
- se connecter automatiquement à un serveur d'un réseau informatique autre qu'un serveur de messagerie,
- s'identifier auprès de ce serveur,
- récupérer automatiquement du serveur au moins une adresse renvoyant vers au moins un site fournisseur de contenu distinct du serveur, cette ou ces adresses étant fonction d'un profil utilisateur défini par le serveur,
- se connecter automatiquement aux adresses reçues du serveur pour récupérer le ou les contenus à diffuser.

L'appareil de diffusion peut être agencé pour signaler la disponibilité d'au moins un nouveau contenu numérique à diffuser suite à la réception d'au moins une notification correspondante du serveur.

L'appareil de diffusion peut notamment être agencé pour émettre un signal visuel et/ou sonore signalant la réception de la notification, sans donner plus d'information que la simple indication de la réception de la notification dans un premier temps, puis dans un deuxième temps, suite à une action de l'utilisateur par exemple sur une interface utilisateur de l'appareil, afficher au moins une information renseignant sur le type du nouveau contenu, éventuellement le profil auquel il se rattache, notamment si ce profil est différent du profil courant dont relève le contenu en cours de diffusion lors de la réception de la notification.

L'appareil peut être agencé pour se connecter par une connexion non filaire au réseau. L'appareil peut comporter, dans certains exemples de mise en oeuvre de l'invention, au moins un écran et/ou au moins un haut-parleur.

L'appareil peut comporter au moins un élément d'habillage équipé d'une fixation amovible, notamment d'une fixation magnétique, ce qui peut faciliter la personnalisation de l'aspect de l'appareil.

L'appareil peut comporter un film ou vitrage teinté ou semi-réfléchissant recouvrant au moins partiellement l'écran, voire s'étendant sur sensiblement toute sa face avant, ce qui peut permettre de masquer des touches de l'appareil, le cas échéant, notamment lorsque celles-ci sont sensitives.

L'appareil peut comporter une interface matérielle permettant d'échanger localement des données avec au moins un périphérique choisi parmi une imprimante, un micro-ordinateur, un scanner, un appareil photonumérique, un assistant personnel numérique, un téléphone, un caméraphone, un portier vidéo, une alarme domestique, un port vidéo et/ou audio, une caméra, une interface d'un réseau domotique, une station météo, une clé USB ou tout autre appareil électronique de création, stockage ou diffusion d'informations numériques disposant d'un moyen de communication, filaire ou non.

L'appareil peut comporter une interface utilisateur comportant des moyens pour afficher sur l'écran au moins une fonctionnalité associée à une touche de l'appareil de diffusion, le cas échéant en fonction du contenu diffusé, notamment du type de contenu, par exemple vidéo, image ou son. L'appareil peut être agencé pour conditionner l'affichage des fonctions à la détection de la proximité de l'utilisateur.

L'appareil peut se présenter sous la forme d'un cadre numérique.

L'appareil peut comporter un pied, par exemple à deux branches afin de permettre de placer l'écran en position paysage ou portrait. L'orientation de l'écran peut éventuellement être détectée automatiquement afin que les images soient affichées avec la bonne orientation.

Le pied peut être fixé de manière amovible sur une face arrière de l'appareil afin de faciliter la fixation murale de celui-ci, le cas échéant, ou la fixation sur l'appareil d'au moins un élément d'habillage permettant de se passer du pied.

La fixation du pied sur la face arrière peut s'effectuer par exemple par aimantation.

L'appareil peut comporter un cache amovible pouvant être fixé sur la face arrière en remplacement du pied afin de dissimuler le ou les aimants utilisés pour la fixation du pied. Ce cache peut être magnétique, le cas échéant.

Plusieurs éléments d'habillage ayant des aspects différents peuvent être proposés à l'utilisateur.

L'appareil de diffusion peut être agencé de telle sorte qu'au moins un élément d'habillage puisse s'accrocher sur une façade avant ou arrière de l'appareil par le biais d'au moins un aimant contenu dans l'appareil.

L'invention a encore pour objet, selon un autre de ses aspects, un serveur permettant la connexion au travers d'un réseau informatique d'au moins un appareil de diffusion tel que défini précédemment, le serveur étant agencé pour permettre la création d'un compte utilisateur et la définition d'au moins un profil utilisateur et en fonction de ce profil rechercher auprès d'au moins un site fournisseur de contenu numérique au moins une adresse d'un contenu correspondant au profil, envoyer cette adresse à l'appareil de diffusion afin de lui permettre de télécharger le contenu correspondant à cette adresse.

Le serveur peut être agencé pour adresser à l'appareil de diffusion la liste des profils utilisateurs associés à un compte utilisateur et pour recevoir une information de l'appareil de diffusion relative à un profil sélectionné.

Le serveur peut être agencé pour rechercher parmi les sites fournisseurs de contenu en fonction d'un profil utilisateur l'existence d'un nouveau contenu et adresser une notification correspondante à l'appareil de diffusion.

Le serveur peut être agencé pour adresser cette notification à l'appareil de diffusion en réponse à une interrogation de l'appareil de diffusion. La notification peut comporter comme information au moins le type du nouveau contenu, la ou les adresses du nouveau contenu, et éventuellement le lecteur nécessaire pour lire ce nouveau contenu.

Le serveur peut être agencé pour adresser à l'appareil de diffusion un lecteur correspondant à un type de contenu à télécharger sur un site fournisseur de contenu.

Le serveur peut présenter encore d'autres caractéristiques telles que définies plus haut, notamment en référence au procédé de diffusion.

L'invention a encore pour objet selon un autre de ses aspects, indépendamment ou en combinaison avec ce qui précède, un cadre numérique comportant :
- un écran,
- de préférence, également un haut-parleur,
- une unité de traitement numérique,
- une interface d'émission/réception de données sans fil avec un réseau informatique,
- une interface utilisateur comportant des touches,
l'appareil étant agencé pour afficher sur l'écran des fonctionnalités associées aux touches.

Un tel affichage permet d'accroître les possibilités de l'interface utilisateur sans pour autant augmenter le nombre de touches et rendre ainsi plus complexe la fabrication du cadre.

Avantageusement, l'affichage des fonctionnalités s'effectue en réponse à une action de l'utilisateur ou à la détection de la proximité de l'utilisateur.

Avantageusement encore, le cadre comporte au moins un élément d'habillage amovible de façon à permettre de modifier aisément l'aspect du cadre.

Les fonctionnalités affichées peuvent dépendre du type de contenu diffusé.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de façon schématique et partielle un exemple d'architecture informatique pour la mise en oeuvre du procédé selon l'invention,
- les figures 2 à 8 illustrent différentes étapes dans la mise en oeuvre d'un exemple de procédé selon l'invention,
- les figures 9 à 14 représentent de manière schématique des pages écran qui peuvent s'afficher sur le terminal lors de la connexion au serveur,
- la figure 15 est une vue schématique en perspective, éclatée, d'un exemple d'appareil de diffusion,
- la figure 16 représente l'appareil de diffusion dans deux orientations,
- la figure 17 représente l'appareil de diffusion sans le pied,
- la figure 18 représente l'appareil de diffusion de côté,
- les figures 19 et 20 illustrent la fixation d'au moins un élément d'habillage sur l'appareil de diffusion,
- la figure 21 est une vue de face de l'appareil de diffusion,
- la figure 22 est une vue schématique illustrant un autre exemple de réalisation de l'appareil de diffusion, et
- les figures 23 à 27 sont des exemples d'affichage de fonctionnalités sur l'écran.

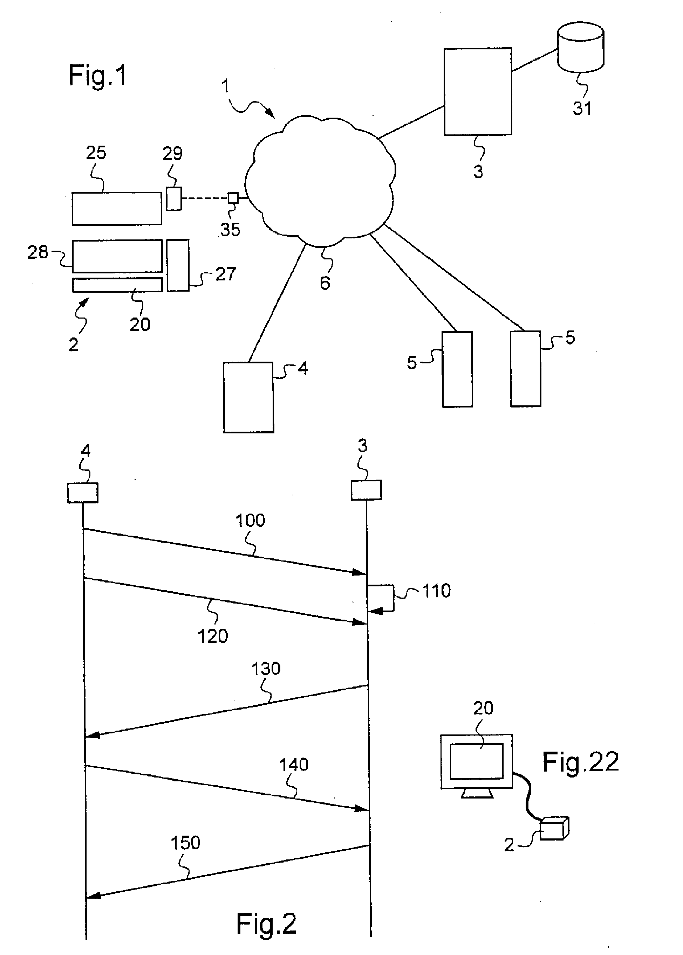

Si l'on se réfère à la figure 1, on voit que l'appareil de diffusion de contenu numérique 2 selon l'invention peut être mis en oeuvre au sein d'une architecture 1 faisant intervenir un réseau informatique 6, incluent par exemple Internet, au moins un serveur 3, au moins un terminal 4 et au moins un site fournisseur de contenu 5.

L'appareil de diffusion 2 peut comporter des moyens 20 de diffusion de contenu numérique, tels que par exemple un projecteur, un écran et/ou au moins un haut-parleur.

L'écran peut être de tout type, par exemple LCD, à rétroprojection, à plasma, électroluminescent, notamment OLED ou autre, étant de préférence couleur.

La résolution de l'écran peut par exemple être supérieure ou égale à la résolution QVGA, par exemple VGA.

L'appareil de diffusion 2 peut également ne pas comporter de moyens de diffusion de contenu numérique qui lui sont propres mais être destiné à être relié à des moyens de diffusion de contenu numérique externes tels que par exemple un moniteur, un téléviseur, une chaîne stéréo, un baladeur, un projecteur vidéo, entre autres. Dans ce cas, les moyens de diffusion de contenu peuvent être reliés de manière filaire ou non à l'appareil de diffusion 2, comme illustré à la figure 22.

L'appareil de diffusion 2 peut être livré à l'utilisateur sans lecteur de contenu numérique d'un type prédéfini, par exemple sans lecteur d'image au format .jpg, gif, bmp ou .pdf, entre autres.

L'appareil de diffusion 2 peut être agencé pour charger un lecteur adapté au type de contenu à diffuser.

L'appareil de diffusion 2 comporte une unité de traitement numérique 28 comportant au moins un processeur, par exemple au moins un microprocesseur ou microcontrôleur, au moins un élément de stockage de données tels que par exemple un circuit de mémoire vive statique et/ou volatile et un système d'exploitation intégré.

L'appareil de diffusion 2 comporte en outre une interface 29 d'émission/réception de données permettant une connexion au réseau 6. Cette interface 29 peut être fixée à demeure sur l'appareil de diffusion ou être amovible.

Dans un exemple de mise en oeuvre de l'invention, l'appareil de diffusion 2 est agencé pour échanger des données par une liaison non filaire avec le réseau 6 et l'interface 29 d'émission/réception de données comporte par exemple un module de communication sans fil, par exemple de type WPAN, par exemple Bluetooth ou ZigBee ou infrarouge, WLAN, par exemple Wi-Fi ou WWAN, par exemple GSM, GPRS ou UMTS.

La connexion de l'appareil de diffusion 2 au réseau 6 peut s'effectuer selon un mode de fonctionnement *ad hoc* ou *infrastructure,* par exemple.

L'appareil de diffusion 2 peut se connecter au réseau *via* un routeur 35 ADSL ou autre, l'invention n'étant pas limité à un moyen particulier permettant de connecter l'appareil de diffusion 2 au réseau 6, la connexion de l'appareil de diffusion 2 au réseau 6 pouvant être filaire ou non.

L'appareil de diffusion 2 comporte encore une interface utilisateur 25 qui peut être contrôlée par l'unité de traitement 28 et peut comporter éventuellement une interface matérielle additionnelle 27 en sus de l'interface 29 permettant l'échange de données avec le réseau 6.

L'interface matérielle additionnelle 27 comporte par exemple au moins un connecteur permettant de recevoir une carte mémoire afin de permettre par exemple le fonctionnement de l'appareil de diffusion en mode autonome avec lecture des données présentes sur cette carte mémoire.

L'interface matérielle additionnelle 27 peut également comporter un connecteur permettant un échange de données par une liaison filaire avec un ordinateur ou un périphérique, par exemple un connecteur USB, un connecteur série ou un connecteur parallèle.

L'appareil de diffusion 2 peut également comporter un connecteur d'alimentation électrique.

L'interface matérielle additionnelle 27 et/ou l'interface 29 d'émission/réception de données peuvent être agencées, le cas échéant, pour pouvoir communiquer avec au moins un périphérique non représenté choisi parmi une imprimante, un micro-ordinateur, un scanner, un appareil photonumérique, un assistant personnel numérique, un téléphone, un caméraphone, une alarme domestique, un portier vidéo, un port vidéo et/ou audio d'un appareil multimédia, une caméra, une interface d'un réseau domotique, une station météo, une clé USB, ou encore tout autre appareil électronique de création, stockage ou diffusion d'information numérique disposant d'un moyen de communication filaire ou non filaire.

Le système d'exploitation intégré à l'appareil de diffusion 2 peut assurer au moins partiellement le téléchargement des contenus, la gestion de l'affichage et/ou de la diffusion des sons ainsi que la gestion des interfaces matérielle 27 et utilisateur 25 et de communication 29 avec le réseau.

La gestion des interfaces utilisateur 25, matérielle 27 et de communication 29 peut encore être effectuée au moins partiellement par des composants spécialisés.

L'interface 27 peut ainsi comporter, par exemple, un contrôleur USB bi-mode (maître et esclave). Lorsque l'appareil de diffusion 2 comporte un écran 20 ou est destiné à être relié à un écran externe, l'appareil de diffusion 2 comporte par exemple un décodeur vidéo intégré de type DSP.

Le système d'exploitation de l'appareil de diffusion 2 repose par exemple sur Linux^{®} mais l'invention n'est pas limitée à un logiciel particulier.

L'interface utilisateur 25 peut comporter un nombre de touches limité, par exemple inférieur à dix, mieux à sept, afin de ne pas compliquer outre mesure la réalisation de l'appareil.

Lorsque l'appareil de diffusion 2 comporte un écran 20, l'interface utilisateur 25 peut provoquer l'affichage sur l'écran 20 d'au moins une fonctionnalité associée à une touche de l'appareil, cette fonctionnalité associée pouvant être permanente ou temporaire et fonction par exemple du contenu en cours de diffusion par l'appareil 2.

Les touches peuvent être de tout type, par exemple sensitives ou à bouton-poussoir.

L'affichage sur l'écran de la fonctionnalité d'une touche peut être permanent ou provoqué en réponse à une action de l'utilisateur ou à la détection de la proximité de celui-ci, par exemple grâce à un capteur infrarouge ou à effet de champ.

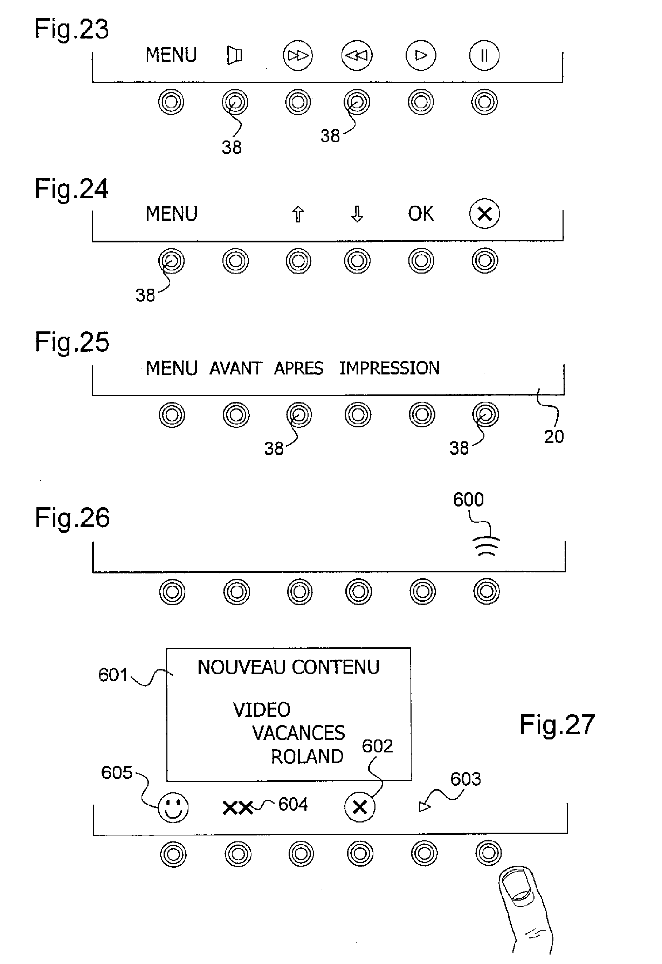

A titre d'exemple, on a illustré aux figures 23 à 25 des exemples de fonctionnalités pouvant être affichées sur l'écran 20, par exemple au-dessus de touches 38.

Dans le cas où le contenu diffusé est une vidéo, les fonctionnalités qui peuvent s'afficher sur l'écran sont par exemple la lecture, l'avance ou le retour rapide, le réglage du son ou l'arrêt sur image, comme illustré sur la figure 23.

Dans le cas où une image est affichée sur l'écran, par exemple au cours de la lecture d'un diaporama, les fonctionnalités qui peuvent s'afficher sur l'écran sont par exemple des fonctions qui permettent de faire défiler les images ou d'imprimer une image, comme cela sera décrit plus loin.

Une fonction menu peut également être affichée avec des fonctions de navigation au sein du menu et de sélection ou de suppression, comme illustré à la figure 24.

Les fonctionnalités associées aux touches 38 de l'interface utilisateur 25 peuvent encore être, par exemple :
- *« change profil »* pour modifier le profil sélectionné parmi ceux prédéfinis dans le compte utilisateur,
- *« sleep* » pour éteindre l'appareil de diffusion après une durée prédéfinie,
- *« change access »* pour connecter l'appareil de diffusion au réseau par un autre point d'accès,
- *« sleep start*/*stop* » pour permettre à l'utilisateur de programmer un horaire de mise en veille et de marche de l'appareil de diffusion, et
- *« status* » pour permettre à un utilisateur de consulter l'état de l'appareil de diffusion, pour savoir par exemple quel est le profil en cours,
- le réglage de la date et/ou de l'heure ou du réveil,
- le réglage de la luminosité et/ou du contraste des images.

Une touche *« menu »* peut permettre à l'utilisateur de configurer manuellement l'accès au réseau, en insérant par exemple une clé WEP ou WPA dans le cas d'une connexion Wi-Fi.

L'interface utilisateur 25 peut également comporter un récepteur de signaux infrarouges ou radio provenant d'une télécommande, par exemple une télécommande spécifique livrée avec l'appareil de diffusion ou une télécommande utilisée par un appareil autre, par exemple un téléviseur ou une chaîne Hi-Fi.

Dans un autre exemple de mise en oeuvre de l'invention, l'interface utilisateur 25 comporte un microphone et un décodeur de messages vocaux.

Conformément à l'invention, l'appareil de diffusion 2 est agencé pour recevoir un contenu à diffuser d'au moins un site fournisseur de contenu 5 en fonction d'informations préalablement transmises au serveur 3, par exemple par le terminal 4.

Le serveur 3 est, dans l'exemple de mise en oeuvre illustré, agencé pour accéder à une base de données 31 stockant des informations relatives à au moins un compte utilisateur associé à l'appareil de diffusion 2.

La base de données 31 à laquelle accède le serveur 3 est par exemple programmée en utilisant le langage PHP et la gestion de la base de données peut être effectuée par un logiciel adapté, par exemple MySQL.

Le compte utilisateur permet d'associer à au moins un appareil de diffusion 2 l'identifiant d'un utilisateur ainsi qu'au moins un profil utilisateur dont dépend le contenu envoyé à l'appareil de diffusion 2 depuis un ou plusieurs sites fournisseurs de contenu concernés.

Le serveur 3 peut présenter une architecture de type module externe *(plug in)* permettant d'accéder facilement grâce à des modules d'extension à de nouveaux services disponibles sur le réseau 6.

Le serveur 3 peut être agencé pour transmettre à l'appareil de diffusion 2 au moins un logiciel de lecture d'un contenu en fonction d'un profil utilisateur correspondant et du type de contenu. Cela peut permettre à l'appareil de diffusion d'accéder à une grande variété de type de contenus sans pour autant nécessiter une unité de traitement 28 complexe, notamment une mémoire importante, car le lecteur adapté à un type de contenu particulier peut être téléchargé par l'appareil de diffusion seulement préalablement à la diffusion de ce contenu et n'a pas à résider en permanence dans une mémoire de l'appareil de diffusion.

Bien entendu, il ne s'agit là que d'un aspect de l'invention et celle-ci n'est pas limitée à un appareil de diffusion qui recevrait le logiciel de lecture, encore appelé lecteur, du serveur, et en variante l'appareil de diffusion pourrait être proposé à l'utilisateur avec au moins un lecteur résident, par exemple un lecteur d'un contenu de type image, par exemple un lecteur .jpg.

L'appareil de diffusion peut ne disposer à un moment donné que d'un seul lecteur adapté à un type de contenu.

La base de données 31 peut éventuellement associer à un compte utilisateur des données d'identification et/ou d'accès pouvant être nécessaires pour la connexion à un site fournisseur de contenu. Ces données comportent par exemple un mot de passe, un identifiant, une adresse mail, un nom ou toute autre information pouvant être nécessaire pour permettre au site fournisseur de contenu de reconnaître l'utilisateur et de lui adresser le contenu demandé.

Le serveur 3 peut être agencé de telle sorte qu'un compte utilisateur ne puisse être accessible qu'après une identification de l'utilisateur, par exemple au moyen d'un mot de passe et/ou d'un identifiant.

Le ou les profils utilisateur associés à un compte utilisateur peuvent n'être modifiables que par un utilisateur autorisé, après identification de celui-ci lors d'un contrôle d'accès.

L'utilisateur peut éventuellement décider du contrôle d'accès associé à un ou plusieurs profils utilisateur, et accepter par exemple qu'un profil donné soit consultable et/ou modifiable par d'autres utilisateurs.

L'accès à un profil utilisateur peut être payant, le cas échéant. Cela peut par exemple être le cas lorsque ce profil utilisateur provoque la réception sur l'appareil de diffusion d'un contenu d'accès restreint, par exemple car protégé par des droits de propriété intellectuelle et qui nécessite une autorisation pour être diffusé.

Un profil utilisateur peut comporter toutes les informations utiles permettant au serveur 3 de rechercher un contenu selon un thème prédéfini par l'utilisateur.

Un profil utilisateur peut comporter une identification du ou des média correspondants au contenu diffusé, par exemple s'il s'agit d'un type de contenu image, vidéo, audio.

Un profil utilisateur peut également comporter une identification d'un site fournisseur de contenu sur lequel le contenu correspondant à la demande de l'utilisateur doit être recherché par le serveur 3, qui peut être par exemple, dans le cas de la diffusion d'images, le site *flickr.com* et dans le cas de la diffusion d'un fichier vidéo le site *youtube.com.*

L'invention n'est pas limitée à un site fournisseur de contenu particulier et celui-ci peut par exemple être un ordinateur individuel dans le cas d'un réseau P2P.

Un site fournisseur de contenu peut encore être un serveur de messagerie.

Dans le cas d'un appareil de diffusion d'un contenu audio, le profil utilisateur peut par exemple comporter l'identification de web radios.

Un profil utilisateur peut également comporter un ou plusieurs filtres de contenu, notamment un ou plusieurs mots clés, encore appelés *tags,* dont le choix peut dépendre du site fournisseur de contenu. L'utilisateur, en créant son profil utilisateur, peut par exemple indiquer qu'il souhaite recevoir des images relatives à la plongée sous-marine et entrer comme mot-clé « plongée », de sorte que le serveur 3 recherchera un contenu en utilisant ce mot-clé.

Le profil utilisateur peut également comporter, comme indiqué ci-dessus, le mot de passe ainsi que l'identifiant utilisé par l'utilisateur pour se connecter à un site fournisseur de contenu, par exemple l'identifiant d'un compte mail de l'utilisateur.

Le profil utilisateur peut également comporter une information renseignant sur un protocole de diffusion du contenu, par exemple un ordre de diffusion des fichiers reçus ou encore la fréquence de changement des images dans le cas où le contenu diffusé est du type image ou la manière dont on passe d'une image à l'autre.

Le serveur 3 peut définir au moins un profil utilisateur par défaut, que l'utilisateur peut modifier, le cas échéant.

Le serveur 3 est agencé pour permettre à l'appareil de diffusion 2 de recevoir le contenu correspondant à un ou plusieurs profils utilisateurs et peut offrir d'autres fonctionnalités à l'utilisateur ou non, par exemple celle de messagerie ou stockage d'images ou de vidéos ou boutique en ligne, entre autres.

L'accès au serveur 3, afin de définir le compte utilisateur et le ou les profils utilisateur associés, s'effectue selon un aspect de l'invention par l'intermédiaire d'un terminal 4 autre que l'appareil de diffusion 2.

Cet accès peut s'effectuer sans que l'appareil de diffusion 2 soit physiquement relié au terminal 4.

Le terminal 4 peut se présenter de diverses manières et par exemple sous la forme d'un ordinateur personnel, d'un téléphone portable, d'un assistant personnel numérique ou d'un combiné téléphonique, le serveur 3 pouvant le cas échéant répondre à des commandes vocales.

La figure 2 représente un exemple d'échange d'informations entre le serveur 3 et le terminal 4, lors de la création d'un compte utilisateur.

Au cours d'une étape initiale 100, le terminal 4 se connecte au serveur 3 et envoie l'identifiant de l'utilisateur. Un tel identifiant est par exemple le nom de l'utilisateur ou un mot de passe.

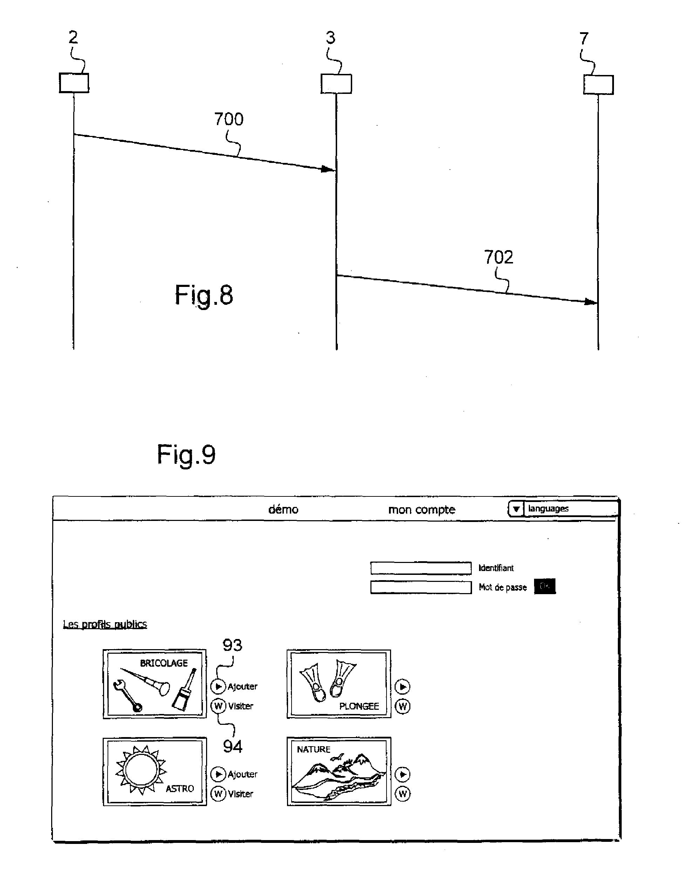

La page qui s'affiche sur le terminal 4, dans le cas où celui-ci comporte un écran, est par exemple celle illustrée à la figure 9.

On voit sur cette figure que la page comporte deux zones permettant l'entrée de l'identifiant ou du mot de passe peut comporter également un onglet de sélection du langage, de la publicité et des liens vers d'autres fonctionnalités, par exemple un lien permettant de télécharger des profils publics dans le cas où l'utilisateur bénéficie déjà d'un compte utilisateur.

Le serveur 3 évalue lors de l'étape 110 si l'identifiant reçu est déjà en mémoire dans la base de données 31, ce qui est par exemple le cas lorsque l'utilisateur souhaite associer un nouvel appareil de diffusion à son compte utilisateur.

Le terminal 4 envoie à l'étape 120 le numéro de série, ou tout autre identifiant de l'appareil de diffusion 2, au serveur 3. Cet identifiant est par exemple l'adresse MAC de l'appareil de diffusion 2.

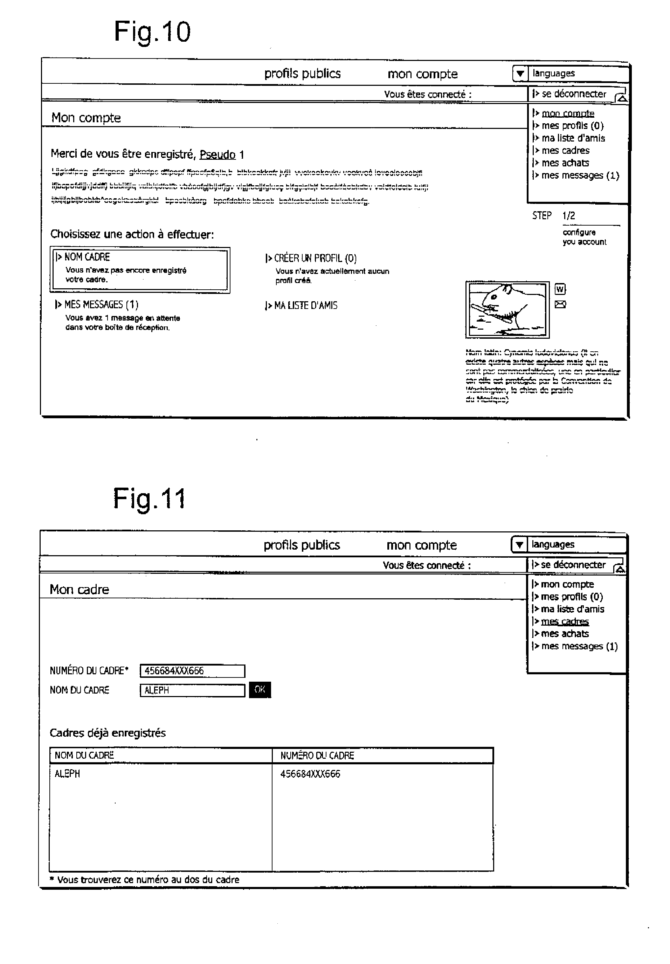

La figure 10 est un exemple de page écran qui peut s'afficher sur le terminal préalablement à l'enregistrement de l'appareil de diffusion.

Le serveur 3 peut permettre à l'utilisateur d'enregistrer au sein d'un même compte plusieurs appareils de diffusion 2, par exemple plusieurs cadres numériques et peut permettre à l'utilisateur de donner un nom à chaque appareil de diffusion, comme illustré à la figure 11.

Au cours de l'étape 140 un profil utilisateur associé au compte utilisateur est défini, via le terminal 4.

L'étape 140 comporte par exemple le choix du type de contenu à diffuser et la source de contenu dans laquelle le serveur doit rechercher le contenu à diffuser.

Dans le cas où le contenu est de type image, la définition du profil utilisateur peut comporter par exemple la définition d'un ordre de diffusion des images, la définition de la fréquence de changement des images affichées, le mode de transition d'une image à l'autre, par exemple par fondu.

Au cours de l'étape 140, l'utilisateur peut également choisir si le profil créé est public ou privé et si un autre utilisateur doit payer ou remplir certaines conditions pour y avoir accès. Le terme « utilisateur » ne doit pas être compris avec un sens restrictif.

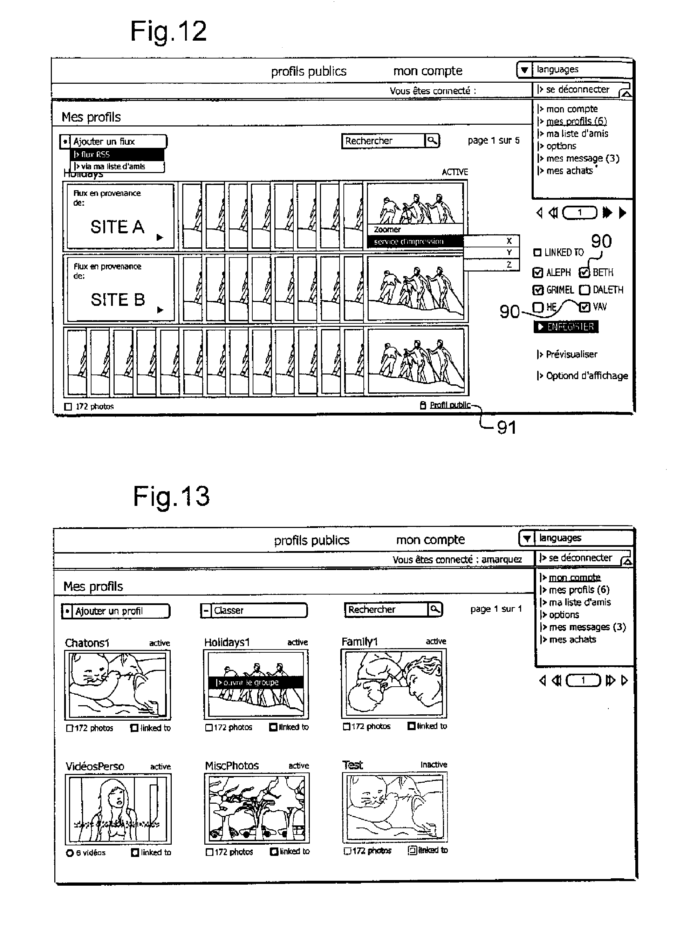

La figure 13 est un exemple de page écran qui peut s'afficher sur le terminal 4 lorsque l'utilisateur qui a accédé à son compte visualise les profils existants.

Le serveur 3 peut présenter pour chaque profil par exemple une image du contenu, par exemple la première image du contenu ou une image déterminée aléatoirement parmi l'ensemble du contenu.

Le serveur peut également, le cas échéant, indiquer pour chaque profil le nombre d'images ou de vidéos et peut comporter un bouton d'action permettant à l'utilisateur de partager un profil entre plusieurs appareils de diffusion.

Lors de la création d'un profil, le terminal peut par exemple recevoir une page écran telle que celle illustrée à la figure 12.

L'utilisateur peut par exemple indiquer en cochant ou décochant des cases 90 le ou les appareils de diffusion associés à son compte et qui pourront bénéficier du profil nouvellement créé.

L'utilisateur peut également sélectionner un flux à ajouter, par exemple un flux RSS ou un flux obtenu *via* des tiers prédéfinis répertoriés, par exemple dans un répertoire qui s'intitule « ma liste d'amis » dans l'exemple de cette figure.

Le serveur 3 peut également présenter sur la page écran un bouton d'action 91 permettant à l'utilisateur d'autoriser l'accès public au profil créé.

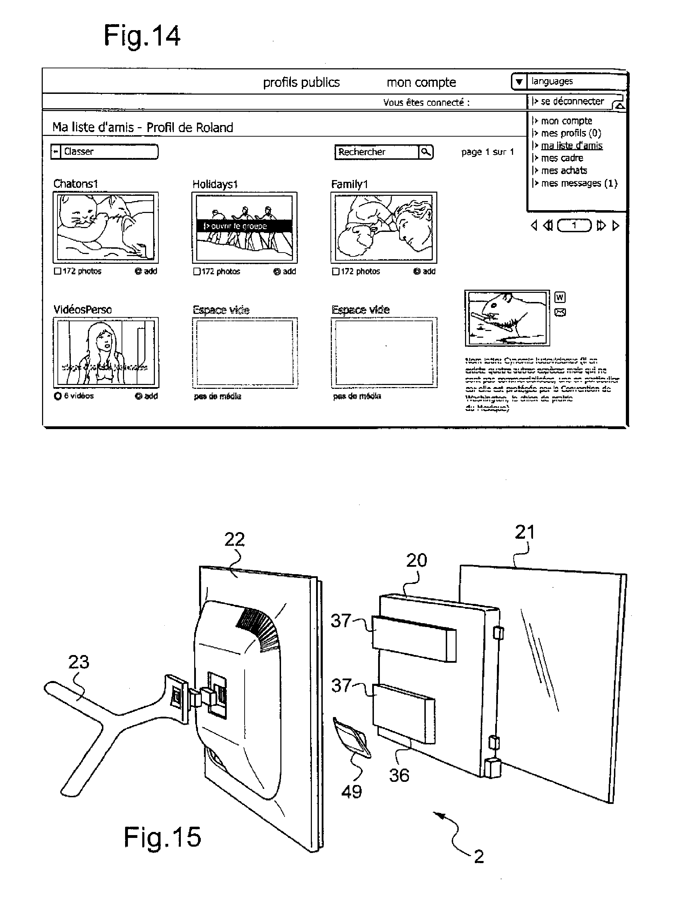

Le serveur 3 peut également permettre à l'utilisateur d'accéder au profil des tiers répertoriés dans le répertoire « ma liste d'amis », comme illustré à la figure 14.

Le serveur 3 peut être agencé pour trier les profils dont l'accès est public afin de les présenter aux visiteurs du serveur par thème par exemple, comme illustré à la figure 9, sur laquelle un thème concerne la plongée et un autre thème la nature. A chaque profil public présenté aux visiteurs peut être associé au moins un bouton d'action 93 permettant d'ajouter le profil correspondant sur son compte et un bouton d'action 94 permettant de visualiser le contenu associé à ce profil avant éventuellement d'ajouter le profil au compte.

Un profil utilisateur peut être plus ou moins complexe et ne fait pas nécessairement intervenir un moteur de recherche sur un site fournisseur de contenu. A la limite, un profil utilisateur peut être limité à une suite de liens prédéfinis et non modifiés par le serveur.

L'utilisateur peut également définir le profil créé comme profil par défaut, qui sera celui automatiquement sélectionné lors de la mise en marche de l'appareil de diffusion 2.

Lors de l'étape 140, l'utilisateur peut également entrer l'identifiant et/ou le mot de passe dont il dispose sur le site fournisseur de contenu sélectionné.

Le serveur 3 envoie lors de l'étape 150 un message d'acquittement.

Les étapes 140 et 150 peuvent être répétées autant de fois que l'utilisateur le désire afin de créer de nouveaux profils utilisateur.

La première connexion au serveur 3 relative à un appareil de diffusion 2 donné peut avoir lieu par exemple lors de l'achat de cet appareil de diffusion 2, certaines informations étant entrées par exemple par le vendeur ou par un service d'assistance dédié contacté par le vendeur.

La première connexion au serveur 3 peut encore avoir lieu après l'achat, par exemple juste avant l'installation de l'appareil de diffusion 2 dans son environnement d'utilisation, par exemple à domicile ou au bureau.

Une ou plusieurs connexions au serveur 3 peuvent avoir lieu ultérieurement afin par exemple d'ajouter un profil, de modifier un profil, de supprimer un profil, d'ajouter ou de supprimer un appareil de diffusion. La modification d'un profil peut comprendre la modification de son accessibilité.

La définition du profil utilisateur peut également comporter l'indication par l'utilisateur, pour ce profil, de son souhait ou non de recevoir une notification de mise à disposition d'un nouveau contenu relatif à ce profil, par exemple à chaque mise à jour du site qui fournit le contenu correspondant.

Une renonciation à une notification peut notamment être utile dans le cas où les mises à jour sont très fréquentes, par exemple parce que le thème choisi par l'utilisateur suscite une mise à jour importante ou alors que l'utilisateur ne souhaite pas interrompre la lecture du profil en cours.

Lors de la création du compte utilisateur et/ou pour la modification du ou des profils utilisateur, les données peuvent être entrées exclusivement par l'intermédiaire du terminal 4 et non par l'interface utilisateur 25 de l'appareil de diffusion 2.

Le serveur 3 est agencé de manière à permettre la réception, par l'appareil de diffusion 2, du contenu à diffuser depuis le ou les sites fournisseurs de contenu 5 définis par le ou les profils utilisateur.

Le serveur 3 est par exemple agencé de manière à ce que le contenu à diffuser soit adressé à l'appareil de diffusion 2 en mode *push.*

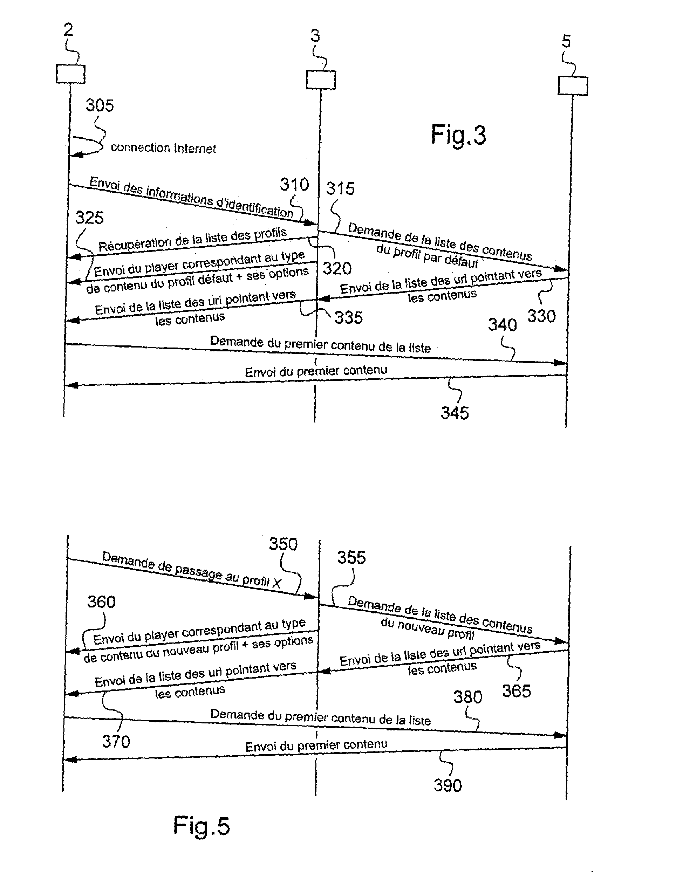

Les figures 3 et 5 illustrent un exemple d'échange d'informations entre l'appareil de diffusion 2, le serveur 3 et un site fournisseur de contenu 5, cet exemple pouvant s'appliquer entre autres dans le cas où l'appareil de diffusion 2 est un cadre numérique.

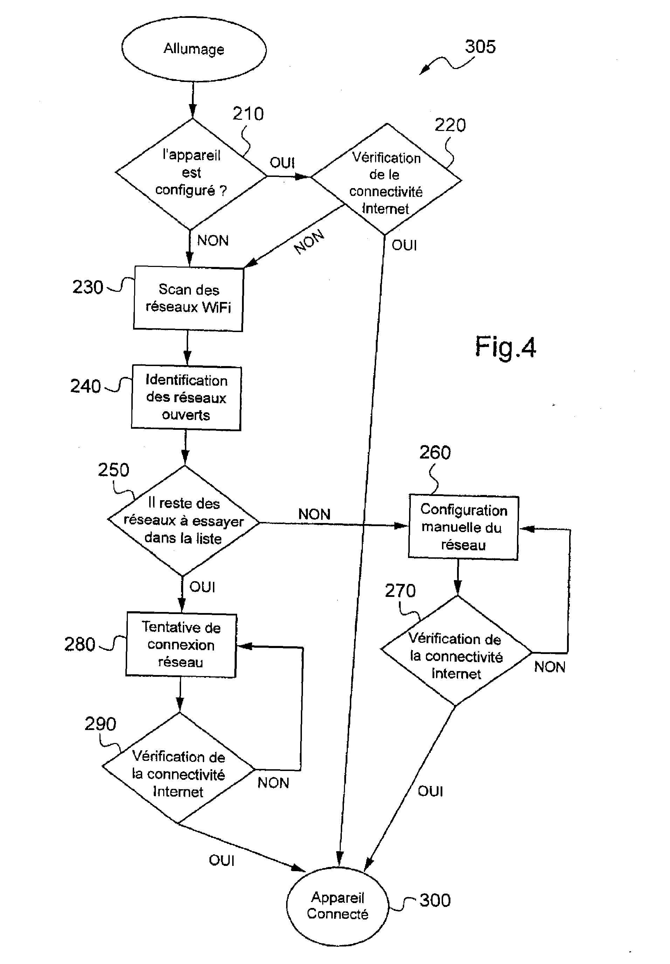

Lors d'une première connexion, c'est-à-dire lorsque l'appareil de diffusion 2 est allumé, celui-ci se connecte d'abord au réseau, par exemple à Internet, selon le processus correspondant à l'étape 305, représenté schématiquement à la figure 4.

L'unité de traitement 28 évalue à l'étape 210 si l'appareil de diffusion 2 est configuré pour se connecter au réseau.

En cas de réponse positive, l'unité de traitement 28 teste au cours d'une étape 220 la capacité de l'appareil de diffusion à se connecter au réseau.

Dans l'exemple d'une connexion non filaire, par exemple Wi-Fi, lorsqu'une des conditions posées aux étapes 210 et 220 n'est pas satisfaite, l'unité de traitement 28 peut tester, au cours d'une étape 230, les différents réseaux Wi-Fi disponibles.

Les réseaux Wi-Fi ouverts sont recensés à l'étape 240. Par « réseaux Wi-Fi ouverts », on désigne ceux n'étant pas cryptés, n'exigeant aucune identification, n'utilisant pas de *proxy* pour se connecter à Internet et attribuant dynamiquement les adresses IP.

L'unité de traitement 28 évalue à l'étape 250 s'il reste des réseaux Wi-Fi à tester dans la liste.

Lorsque ce n'est pas le cas, une configuration manuelle du réseau est effectuée à l'étape 260. L'utilisateur utilise par exemple pour ce faire la touche *« menu »* de l'interface utilisateur 25 et introduit par exemple une clé WEP ou WPA.

La connectivité au réseau 6 est à nouveau testée au cours d'une étape 270.

En cas de résultat négatif au cours de cette étape 270, l'unité de traitement 28 effectue à nouveau l'étape 260.

En cas de réponse positive à l'étape 250, l'unité de traitement 28 tente d'établir une connexion au réseau 6 lors d'une étape 280, laquelle est suivie d'une étape 290 de vérification de la connectivité au réseau 6.

En cas de réponse négative, l'unité de traitement 28 effectue à nouveau l'étape 280 et réitère la tentative de connexion au réseau. Lorsqu'à l'issue des étapes 220, 270 et 290 l'unité de traitement 28 détermine que la connectivité de l'appareil de diffusion 2 au réseau 6 est possible, ce dernier se connecte au réseau 6 au cours d'une étape 300.

En revenant à la figure 3, au cours d'une étape 310 suivant le processus de connexion 305, l'appareil de diffusion 2 envoie des informations d'identification au serveur 3. Ces informations comportent par exemple l'adresse MAC de l'appareil de diffusion 2.

Lors de l'étape 315, le serveur 3 établit en fonction d'un profil utilisateur courant qui est par exemple le profil défini par l'utilisateur comme étant le profil par défaut, une connexion avec un site fournisseur de contenu 5 et demande à ce site fournisseur 5 la liste des adresses des contenus correspondant à ce profil.

L'obtention des adresses des contenus s'effectue par exemple grâce à une interface de programmation adaptée.

Au cours d'une étape 320, le serveur 3 peut transmettre à l'appareil de diffusion 2 la liste des profils utilisateurs définis dans le compte utilisateur.

La transmission de cette liste peut avoir pour but de permettre à l'utilisateur de modifier le profil courant.

Au cours d'une étape 325, le serveur 3 transmet à l'appareil de diffusion 2 le logiciel de lecture correspondant au type de contenu du profil courant.

Au cours d'une étape 330, le site fournisseur de contenu 5 envoie au serveur 3, en réponse à la demande reçue lors de l'étape 315, une liste de liens renvoyant aux contenus recherchés. Ces liens sont, dans l'exemple considéré, des adresses URL.

L'étape 330 est suivie d'une étape 335 au cours de laquelle les données reçues par le serveur au cours de l'étape 330 sont transmises par le serveur 3 à l'appareil de diffusion 2.

L'appareil de diffusion 2 peut travailler en mode *push,* c'est-à-dire qu'il est agencé pour, lors d'une étape 340, se connecter directement au site fournisseur de contenu 5.

Au cours de cette étape 340, l'appareil de diffusion 2 adresse au site fournisseur de contenu 5 une demande du premier contenu de la liste reçue lors de l'étape 335, en fournissant la ou les adresses correspondantes.

Le site fournisseur de contenu 5 répond à cette demande en envoyant à l'étape 345 le contenu recherché.

L'appareil de diffusion 2 diffuse chaque contenu avec les préférences définies dans le profil utilisateur courant, qui lui ont été transmises lors de l'envoi du lecteur à l'étape 325.

L'appareil de diffusion 2 qui a reçu la liste des profils peut afficher ces profils et permettre à l'utilisateur, en agissant sur l'interface utilisateur 25, de changer le profil courant afin par exemple de décider de l'affichage d'images correspondant à un autre thème.

Pour modifier le profil, l'utilisateur utilise par exemple la touche *« change profil »* de l'interface utilisateur 25.

La figure 5 illustre différentes étapes qui peuvent avoir lieu lors de la demande de changement de profil.

On suppose que l'utilisateur a exercé une action sur l'interface utilisateur 25 pour demander un nouveau profil.

L'appareil de diffusion 2 demande alors au cours d'une étape 350 au serveur 3 de changer de profil. Cette demande entraîne, lors d'une étape 355, la demande par le serveur 3 au site fournisseur de contenu 5 concerné de la liste des contenus du profil nouvellement sélectionné.

Lors d'une étape 360, similaire à l'étape 320 précédemment décrite, le serveur 3 envoie à l'appareil de diffusion 2, le cas échéant, le logiciel de lecture en rapport avec le type de contenu défini dans le profil utilisateur nouvellement sélectionné.

Les étapes 365, 370, 375 et 380 correspondent respectivement aux étapes 330, 335, 340 et 345 avec le profil utilisateur modifié lors de l'étape 350.

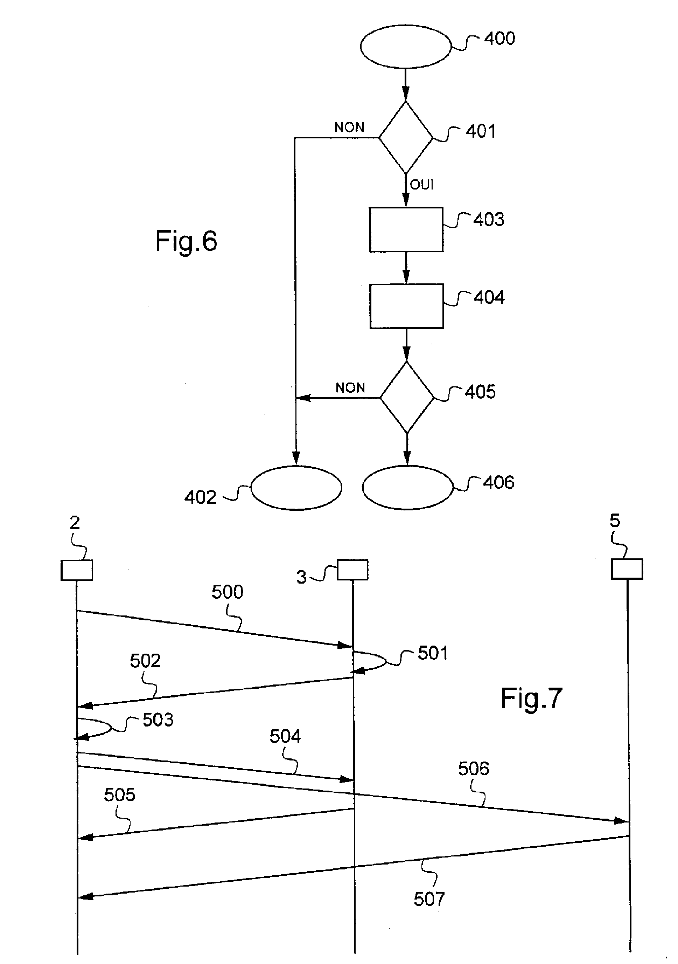

On va maintenant décrire en référence à la figure 6 un exemple de recherche par le serveur 3 d'une modification d'un contenu disponible sur le ou les sites fournisseurs correspondants à un profil utilisateur.

Le serveur peut être agencé pour sélectionner à l'étape 400 un profil à tester parmi tous les profils utilisateur.

Le serveur détermine à l'étape 401 si l'utilisateur a souhaité recevoir une notification de mise à jour d'un nouveau contenu ou non. Dans la négative, le serveur cesse la procédure de test à l'étape 402 concernant ce profil. Dans l'affirmative, le serveur se connecte à l'étape 403 au site fournisseur de contenu défini par le profil et vérifie à l'étape 404 l'existence d'un nouveau contenu. Cette vérification peut s'effectuer par exemple en téléchargeant la liste des contenus ou le flux, en déterminant le HASH de cette liste de contenu ou de ce flux et en le comparant avec un HASH précédent. On appelle HASH une suite alphanumérique de longueur définie obtenue par l'application d'un algorithme, par exemple SHA, MD5 à un fichier, notamment un texte. Deux HASH identiques indiquent une très forte probabilité d'identité des fichiers correspondants et permettent de simplifier la comparaison de deux fichiers longs.

Le serveur détermine à l'étape 405 si le nouveau HASH est différent du précédent et dans la négative, aboutit à l'étape 402 précitée. Dans l'affirmative, le serveur enregistre à l'étape 406 cette information afin de pouvoir signaler à l'appareil de diffusion 2 l'existence du nouveau contenu.

Le serveur 3 peut être agencé pour permettre à l'appareil de diffusion 2 de recevoir une notification du nouveau contenu.

L'appareil de diffusion 2 peut être agencé pour interroger périodiquement à l'étape 500, comme illustré sur la figure 7, le serveur 3. Celui-ci recherche à l'étape 501 le résultat du processus de test de la figure 6 précédemment décrite. Dans l'affirmative, le serveur 3 notifie à l'appareil de diffusion 2 à l'étape 502 l'existence du nouveau contenu et lui transmet comme information associée le type du contenu, la ou les adresses du contenu, ainsi que l'adresse d'un lecteur permettant de lire ce contenu.

Lorsque l'utilisateur agit à l'étape 503 sur l'interface utilisateur de l'appareil de diffusion afin de provoquer le téléchargement du nouveau contenu, l'appareil de diffusion émet à l'étape 504 une requête demandant au serveur le logiciel de lecture. Ce dernier lui est transmis à l'étape 505.

L'appareil de diffusion adresse également à l'étape 506 au site fournisseur de contenu concerné la ou les adresses de ce nouveau contenu, lequel est transmis à l'étape 507 à l'appareil de diffusion.

La réception d'une notification de nouveau contenu peut être signalée de diverses manières à l'utilisateur, par exemple par l'apparition d'un message 600 sur l'écran, comme illustré à la figure 26.

Lorsque l'utilisateur approche des touches sensitives par exemple ou exerce toute autre action sur l'appareil de diffusion, des informations relatives au nouveau contenu peuvent être affichées sur l'écran, par exemple l'origine de celui-ci, le type de contenu, et le sujet du contenu, ainsi éventuellement que la taille du contenu, comme illustré à la figure 27. Peuvent également s'afficher des fonctionnalités 602 et 603 permettant par exemple d'accepter la réception du nouveau contenu ou de supprimer celui-ci.

Eventuellement, des fonctionnalités 604 ou 605 permettant de bannir ou de remercier la source à l'origine de ce nouveau contenu peuvent être prévues. Dans le cas où une source est bannie, l'identifiant de cette source peut être répertorié par le serveur de façon à ne plus accepter de contenu de cette source ou ne plus y rechercher de contenu. Dans le cas où une source est remerciée, le serveur peut par exemple répertorier un identifiant de cette source dans un répertoire correspondant en l'attente d'une action de l'utilisateur et/ou provoquer l'envoi automatique d'un message de remerciement à cette source.

L'utilisateur peut exercer une action sur l'appareil de diffusion afin de provoquer l'impression d'images ou de répertorier le contenu diffusé dans un répertoire particulier, par exemple un répertoire correspondant à des favoris ou au contraire un répertoire correspondant à une corbeille, répertoire qui peut être géré par le serveur 3 ou éventuellement par le site fournisseur de contenu dont provient ce contenu.

On a illustré à la figure 8 un exemple d'échanges d'informations entre l'appareil de diffusion, le serveur et un site d'impression. Lorsque l'utilisateur exerce une action sur l'interface utilisateur, par exemple appuie sur la touche *impression* au cours de l'affichage d'une image, l'appareil de diffusion envoie à l'étape 700 au serveur 3 l'adresse du contenu affiché. Le serveur transmet l'étape 702 à un site d'impression prédéfini dans le profil correspondant ou plus généralement sur le compte utilisateur, le cas échéant l'adresse du contenu à imprimer.

L'utilisateur peut ensuite se connecter à ce site d'impression pour consulter l'ensemble des images prêtes à l'impression et fournir un moyen de paiement, le cas échéant.

Dans une variante, le serveur 3 peut adresser à l'appareil de diffusion 2 une liste de sites entre lesquels l'utilisateur peut choisir pour effectuer l'impression.

L'appareil de diffusion 2, notamment lorsqu'il se présente sous la forme d'un cadre numérique, peut être réalisé de diverses façons.

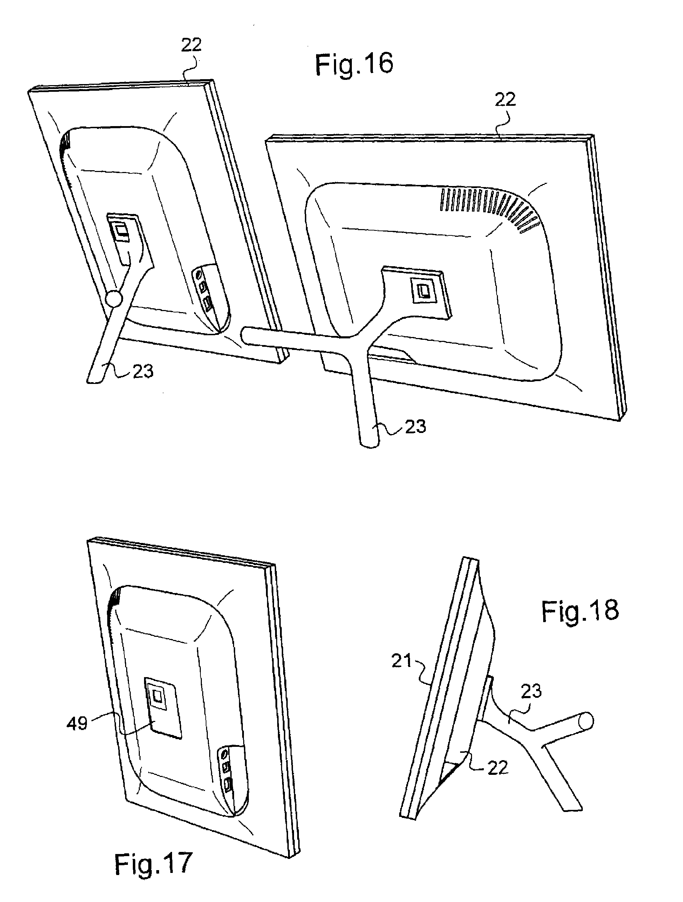

On a représenté aux figures 15 à 21 un appareil de diffusion sous la forme d'un cadre numérique. Bien entendu, il ne s'agit que d'un exemple et l'invention peut aussi s'appliquer à d'autres appareils de diffusion 2, par exemple de contenu exclusivement audio, ou à des appareils de diffusion utilisant comme moyen de diffusion un moniteur ou une chaîne stéréo par exemple.

Dans l'exemple illustré aux figures 15 à 21, l'appareil de diffusion 2 comporte un module interne actif 36, une façade avant 21 et une façade arrière 22.

Le module interne actif 36 comporte par exemple l'écran 20 et des cartes électroniques 37 qui sont par exemple reliées à l'écran 20 par des câbles souples et/ou par des connecteurs électriques.

L'écran 20 est par exemple de type LCD rétro-éclairé.

La façade avant 21 peut comporter un vitrage ou film teinté ou semi réfléchissant, par exemple en Plexiglas^{®} teinté dans la masse, ne permettant pas de discerner l'écran 20 lorsque celui-ci est éteint.

La ou les cartes électroniques 37 peuvent par exemple être vissées ou encliquetées sur la façade arrière 22, de même éventuellement que l'écran 20. La façade avant 21 peut se fixer de diverses manières sur l'écran 20 et/ou la façade arrière 22, par exemple par encliquetage, vissage ou par des moyens de fixation magnétiques.

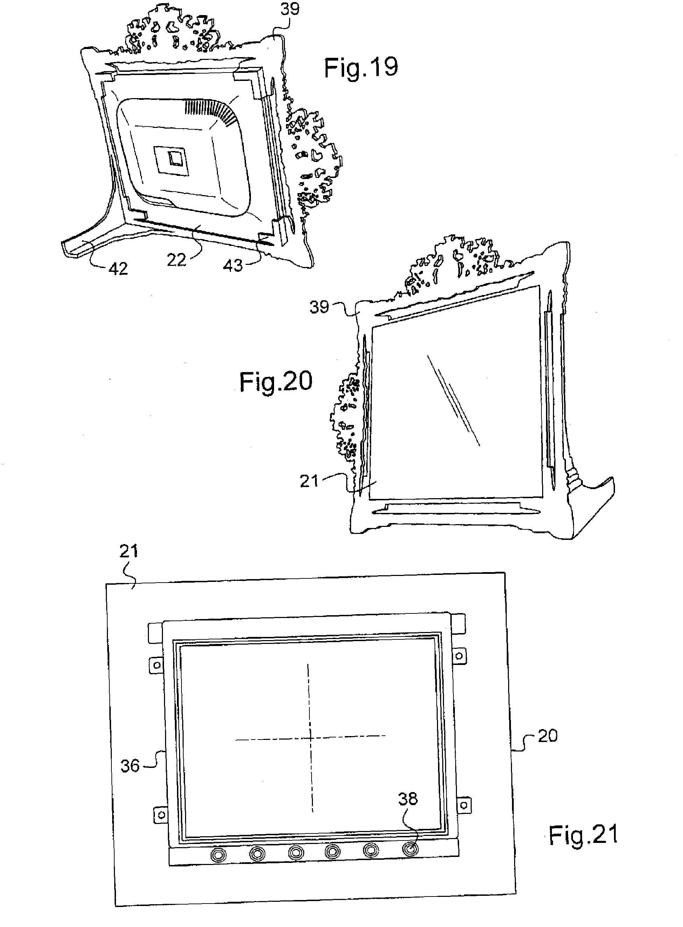

La façade arrière 22 peut comporter dans les quatre coins des aimants non apparents sur la figure 15 destinés à permettre la fixation amovible sur la façade arrière 22 d'un ou plusieurs éléments d'habillage tels que par exemple l'élément d'habillage 39 représenté aux figures 19 et 20.

L'appareil de diffusion 2 peut, comme représenté à la figure 15, comporter un pied 23 amovible pouvant se monter par une fixation magnétique sur la façade arrière 22.

En variante, en l'absence du pied 23, comme illustré à la figure 3, l'appareil de diffusion 2 peut être maintenu contre un mur grâce à un système de fixation approprié ou en variante être maintenu dans la position recherchée grâce à un ou plusieurs éléments d'habillage comme illustré à la figure 19. Sur cette figure, on voit qu'au moins un élément d'habillage peut comporter une extension 42 qui permet à l'appareil de diffusion de reposer avec l'inclinaison souhaitée.

Au moins un élément d'habillage peut être métallique ou comporter des parties magnétiques grâce par exemple à l'introduction d'une charge de particules à susceptibilité magnétique non nulle.

Dans l'exemple de la figure 19, l'élément d'habillage 39 peut ainsi comporter des parties d'angle 43 magnétiques, par exemple parce que métalliques, qui sont aimantées par les aimants situés sous la façade arrière 22.

Un cache 49 peut être fixé sur la façade en arrière en remplacement du pied 23, le cas échéant.

Dans l'exemple illustré, l'interface utilisateur comporte des touches sensitives 38 disposées derrière la façade 21, par exemple au nombre de six.

L'utilisateur peut, en agissant sur l'une des touches 38 modifier un paramètre de diffusion du contenu, comme expliqué précédemment.

L'invention n'est pas limitée aux exemples de mise en oeuvre qui viennent d'être décrits.

Les caractéristiques des différents exemples de réalisation peuvent se combiner au sein de variantes non illustrées.

En particulier, on peut modifier l'ordre des étapes des figures 2 à 8 et ajouter des étapes supplémentaires ou remplacer certaines étapes par d'autres en fonction des fonctions recherchées.

L'expression « comportant un » doit se comprendre comme étant synonyme de « comportant au moins un » sauf si le contraire est spécifié.

## Revendications

1. Procédé de diffusion d'au moins un contenu numérique au moyen d'au moins un appareil (2) de diffusion de ce contenu, notamment un cadre numérique, le procédé comportant les étapes suivantes :
- permettre de créer, notamment par le biais d'un terminal (4) autre que l'appareil de diffusion, sur un serveur (3) d'un réseau informatique (6) permettant l'accès à au moins un site (5) fournisseur de contenu, au moins un compte utilisateur,
- permettre de définir sur le compte utilisateur au moins un profil utilisateur,
- transmettre depuis le serveur, en fonction du profil utilisateur, à l'appareil de diffusion connecté au réseau, au moins une adresse d'un contenu numérique présent sur un site fournisseur de contenu afin de permettre à l'appareil de diffusion (2) de récupérer et de diffuser ce contenu numérique grâce à des moyens (20) de diffusion, notamment sonores et/ou visuels.

2. Procédé selon la revendication 1, comportant la fourniture avec l'appareil de diffusion (2) d'une adresse du serveur (3) sur le réseau (6) et d'un identifiant de l'appareil de diffusion (2).

3. Procédé selon l'une des revendications 1 et 2, dans lequel le serveur (3) envoie à l'appareil de diffusion (2) la liste des profils utilisateur existant sur le compte et dans lequel on permet à l'utilisateur d'exercer une action sur l'appareil de diffusion (2) afin de sélectionner un profil utilisateur parmi les profils de la liste, de façon à diffuser un contenu correspondant au profil sélectionné.

4. Procédé selon l'une quelconque des revendications précédentes, dans lequel le serveur (3) envoie à l'appareil de diffusion un logiciel de lecture du contenu numérique en fonction du type de contenu numérique à diffuser.

5. Procédé selon l'une quelconque des revendications 1 à 4, dans lequel le serveur (3) est agencé pour effectuer, en fonction d'un profil utilisateur, au moins une requête auprès d'un site fournisseur de contenu (5) afin d'obtenir au moins une adresse permettant à l'appareil de diffusion (2) d'accéder à au moins un contenu correspondant à ce profil utilisateur.

6. Procédé selon l'une quelconque des revendications précédentes, la création du compte utilisateur comportant la fourniture au serveur (3) d'un identifiant de l'appareil de diffusion et d'un identifiant de l'utilisateur.

7. Procédé selon l'une quelconque des revendications précédentes, comportant l'étape consistant à permettre à l'utilisateur, au cours de la diffusion d'un contenu, d'agir sur une interface utilisateur (25) de l'appareil de diffusion (2) et comportant également l'étape consistant à modifier le contenu reçu en fonction de cette action.

8. Procédé selon l'une quelconque des revendications précédentes, comportant l'étape consistant à transmettre à l'appareil de diffusion (2) connecté au réseau (6) une notification de mise à disposition d'au moins un nouveau contenu numérique à diffuser.

9. Procédé selon la revendication 8, dans lequel la réception de la notification est signalée sur l'appareil de diffusion (2) par un message sonore et/ou visuel.

10. Procédé selon l'une quelconque des revendications précédentes, dans lequel le serveur (3) adresse à l'appareil de diffusion (2) une liste d'adresses auxquelles l'appareil de diffusion se connecte successivement pour télécharger des contenus correspondants.

11. Procédé selon l'une quelconque des revendications précédentes, l'appareil de diffusion (2) comportant un écran (20) et étant dépourvu de clavier alphanumérique complet, de disque dur, de lecteur de disquette et de lecteur de disque optique.

12. Procédé selon l'une quelconque des revendications précédentes, l'appareil de diffusion comportant des moyens de communication (29) non filaires, notamment Wi-Fi, pour échanger des données avec le réseau informatique (6).

13. Procédé selon l'une quelconque des revendications précédentes, le réseau étant Internet.

14. Procédé selon l'une quelconque des revendications 1 à 13, comportant l'affichage sur un écran (20) de l'appareil de diffusion d'au moins une fonctionnalité associée à une touche (38) de l'appareil de diffusion, la fonctionnalité affichée étant notamment fonction du contenu diffusé, notamment du type de contenu et/ou du site de provenance.

15. Procédé selon la revendication précédente, comportant la détection de la proximité de l'utilisateur pour provoquer l'affichage de la fonctionnalité sur l'écran.

16. Procédé selon l'une quelconque des revendications 1 à 15, dans lequel le terminal (4) peut accéder au contenu présent sur le site fournisseur et téléchargé par l'appareil de diffusion (2).

17. Système informatique comportant :
- un appareil de diffusion (2) d'un contenu numérique, dépourvu de clavier alphanumérique complet et, notamment, comportant des moyens de diffusion sonores et/ou visuels, pouvant accéder à un réseau (6),
- un serveur (3) accessible par le réseau (6), le serveur étant agencé pour :
• permettre la connexion au serveur d'un terminal (4), notamment distinct de l'appareil de diffusion,
• permettre la création d'un compte utilisateur définissant au moins un profil utilisateur associé à l'appareil de diffusion,
• rechercher en fonction du profil utilisateur au moins une adresse sur un site (5) fournisseur de contenu accessible par le réseau,
• amener l'appareil de diffusion à télécharger depuis l'adresse ainsi recherchée un contenu du site fournisseur de contenu, notamment en adressant à l'appareil de diffusion cette adresse.

18. Appareil de diffusion (2) d'un contenu numérique, notamment cadre numérique, comportant :
- des moyens (20) de diffusion sonores et/ou visuels,
- une unité de traitement numérique (28) agencée pour permettre à l'appareil de:
• se connecter automatiquement à un serveur (3) d'un réseau informatique autre qu'un serveur de messagerie,
• s'identifier auprès de ce serveur,
• récupérer automatiquement du serveur au moins une adresse renvoyant vers au moins un site fournisseur de contenu distinct du serveur, cette ou ces adresses étant fonction d'un profil utilisateur défini par le serveur,
• se connecter automatiquement aux adresses reçues du serveur pour récupérer le contenu à diffuser.

19. Appareil selon la revendication 18, comportant au moins un élément d'habillage (21 ; 22) équipé d'une fixation amovible, notamment d'une fixation magnétique.

20. Appareil selon la revendication 18 ou 19, les moyens (20) comportant un écran, l'appareil comportant un film ou vitrage teinté ou semi-réfléchissant recouvrant au moins partiellement l'écran (20), mieux toute la face avant.

21. Appareil selon l'une quelconque des revendications 18 à 20, comportant une interface utilisateur (25) comportant des moyens pour afficher sur un écran (20) au moins une fonctionnalité associée à une touche (38) de l'appareil.

22. Appareil selon la revendication 21, la fonctionnalité étant affichée en réponse à une action de l'utilisateur ou à la détection de la proximité de l'utilisateur.

23. Appareil selon la revendication 21 ou 22, la fonctionnalité affichée dépendant du contenu diffusé.

24. Serveur (3) permettant la connexion par un réseau (6) d'au moins un appareil de diffusion (2) selon l'une quelconque des revendications 18 à 23, le serveur étant agencé pour permettre la création d'un compte utilisateur et la définition d'au moins un profil utilisateur et en fonction de ce profil rechercher auprès d'au moins un site fournisseur de contenu numérique (5) au moins une adresse d'un contenu correspondant au profil, envoyer cette adresse à l'appareil de diffusion (2) afin de lui permettre de télécharger le contenu correspondant à cette adresse.

25. Serveur selon la revendication 24, étant agencé pour adresser à l'appareil de diffusion la liste des profils utilisateur associés à un compte utilisateur et pour recevoir une information de l'appareil de diffusion relative au profil sélectionné.

26. Procédé de diffusion d'un contenu numérique au moyen d'un appareil de diffusion (2) de ce contenu, notamment un cadre numérique, le procédé comportant les étapes suivantes :
- permettre de définir sur un serveur (3) d'un réseau informatique permettant l'accès à au moins un site (5) fournisseur de contenu, au moins un profil utilisateur associé à un compte utilisateur,
- transmettre depuis le serveur en fonction du profil utilisateur, à l'appareil de diffusion connecté au réseau, au moins une adresse d'un contenu numérique présent sur un site fournisseur de contenu afin de permettre à l'appareil de diffusion de récupérer et de diffuser le contenu numérique grâce à des moyens (20) de diffusion sonores et/ou visuels,
- permettre la transmission depuis le serveur (3) à l'appareil de diffusion (2) d'une liste de profils utilisateurs associés à un compte utilisateur,
- permettre à l'utilisateur de sélectionner un profil utilisateur en agissant sur une interface utilisateur de l'appareil de diffusion,
- transmettre à l'appareil de diffusion, en fonction de ce nouveau profil utilisateur ainsi sélectionné, au moins une adresse d'un contenu numérique correspondant, et éventuellement le logiciel de lecture correspondant.

27. Procédé de diffusion d'un contenu numérique au moyen d'un appareil de diffusion de ce contenu, notamment un cadre numérique, le procédé comportant les étapes suivantes :
- interroger périodiquement avec l'appareil de diffusion (2) un serveur (3) agencé pour signaler la disponibilité d'un nouveau contenu numérique,
- interroger avec le serveur au moins un site fournisseur afin de détecter la présence sur ce site fournisseur d'un nouveau contenu numérique et dans l'affirmative, signaler la présence de ce nouveau contenu numérique à l'appareil de diffusion,
- transmettre avec le serveur à l'appareil de diffusion une notification concernant la présence d'un nouveau contenu numérique, cette notification comportant au moins l'adresse permettant de récupérer sur le site fournisseur le nouveau contenu, ainsi éventuellement que l'adresse d'un logiciel de lecture correspondant à ce nouveau contenu,
- permettre à l'appareil de diffusion, en réponse à une action de l'utilisateur sur une interface utilisateur, de récupérer le contenu numérique à l'adresse ainsi communiquée par le serveur.
